# EUROPEAN PATENT APPLICATION

(11) **EP 4 254 303 A1**
(43) Date of publication of application: **04.10.2023**
(21) Application number: 20963568.9
(22) Date of filing: 27.11.2020
(51) Int. Cl.: G06Q 50/06

(54) **POWER MANAGEMENT DEVICE AND POWER MANAGEMENT METHOD**

(71) Applicant: Hitachi, Ltd., Tokyo 100-8280 (JP)
(72) Inventor: SAITO, Nao, Tokyo 100-8280 (JP); MORIWAKI, Norihiko, Tokyo 100-8280 (JP); HAYASHI, Hideki, Tokyo 100-8280 (JP); UTSUMI, Masato, Tokyo 100-8280 (JP); MONDEN, Kazuya, Tokyo 100-8280 (JP); SHOMURA, Yusuke, Tokyo 100-8280 (JP); SUZUKI, Toshiaki, Tokyo 100-8280 (JP); ISHII, Yoshikazu, Tokyo 100-8280 (JP); JO, Mingyu, Tokyo 100-8280 (JP)
(74) Representative: Mewburn Ellis LLP
(86) International application number: PCT/JP2020/044368
(87) International publication number: WO 2022/113304

(57) **Abstract**

An energy management controller (1) includes a virtual grid generating unit (110) that for each of grids, generates a virtual grid that collectively manages information including information on an energy resource and a wire, in order to carry out efficient power management, and a deal management unit (150) that based on the generated virtual grid, manages a power deal with a consumer-side supplied with power from the energy resource. The energy management controller (1) further includes an RE coloring unit (132) that classifies power by coloring to allow power deals based on RE coloring.

## Description

### Technical Field

The present invention relates to a power management device and a power management method.

### Background Art

In recent years, the need for decarbonization, such as the RE (renewable energy) 100 initiative for using almost 100% renewable energy, has been increasing and renewable energy and electric vehicles (EV) has become widespread at an accelerated pace. In conventional power grids, inter-system coupling for use of renewable energy and EVs is not sufficiently taken into consideration. This has led to demand for grid reconstruction and flexible operations for energy consumption. A grid refers to a power transmission system (power transmission grid). As described in NPL 1, a virtual power plant (VPP) that collectively manages a group of power supply resources has been developed.

### Citation List

### Non-Patent Literature

NPL 1: Jun Kato and Hidetoshi Takada, "Future Energy Technologies " [online], NTT Technical Review, [retrieved on October 6, 2020], Internet URL: https://www.ntt-review.jp/archive/ntttechnical.php?contents=ntr202007fa3_s. html

### Summary of Invention

### Technical Problem

In recent years, however, changes in operations of grids have become increasingly intensive. Causes of this phenomenon include various restrictions imposed by contracts or physical installations, such as grids, that connect power suppliers and consumers (installation arrangement, power transmission capacity, and the like), power output fluctuations in renewable energy due to weather changes, and movement of EVs. As a result, it is now difficult for a consumer to be timely supplied with power having characteristics (RE 100, low cost, etc.) the consumer needs, from a power supplier the consumer wants to deal with.

The present invention has been conceived in view of such a background, and an object of the present invention is to carry out efficient power management.

### Solution to Problem

In order to solve the above problem, a power management device according to the present invention includes: a virtual grid generating unit that for each of grids, generates a virtual grid for collectively managing information including information on a power supply resource and a wire; and a power deal management unit that based on the generated virtual grid, manages a power deal with a demand-side supplied with power from the power supply resource. Other solutions will be described in the description on a necessary basis.

### Advantageous Effects of Invention

According to the present invention, efficient power management can be carried out.

### Brief Description of Drawings

FIG. 1 depicts a configuration example of an energy management control system according to an embodiment;
FIG. 2 depicts a hardware configuration of an energy management controller;
FIG. 3 depicts a layered configuration of the energy management control system;
FIG. 4 is a flowchart showing a processing procedure by the energy management control system according to this embodiment;
FIG. 5 depicts an example of power demand control in a virtual grid;
FIG. 6 depicts an example of the energy management control system, the example being related to a coloring process;
FIG. 7 depicts an example of data types used in a blockchain used in this embodiment;
FIG. 8A depicts a business model (business model 1) using a virtual grid;
FIG. 8B depicts a business model (business model 2) using a virtual grid;
FIG. 9 depicts a specific example in which a virtual grid is applied;
FIG. 10 depicts an example of power control by the energy management controller; and
FIG. 11 is a conceptual diagram showing coupling between the virtual grid according to this embodiment and a conventional smart grid in power distribution.

### Description of Embodiments

Modes for carrying out the present invention (which are referred to as "embodiments") will then be described, referring to the drawings on a necessary basis. In the drawings, the same constituent elements will be denoted by the same reference signs and repetitive description of them will be omitted.

### <Energy Management Control System Z>

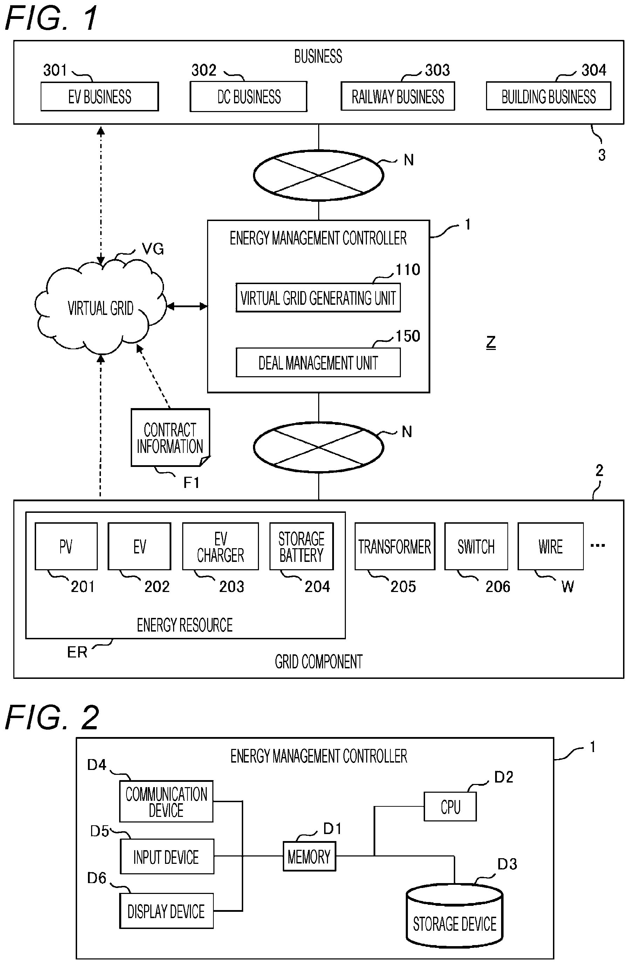

FIG. 1 depicts a configuration example of an energy management control system Z according to an embodiment. The energy management control system Z includes an energy management controller 1, grid components 2, and businesses 3.

The grid components 2 are components making up a grid (power transmission system). In the example shown in FIG. 1, the grid components 2 includes a photovoltaic power generator (PV) 201, an electric vehicle (EV) 202, an EV charger 203, a storage battery 204, a transformer 205, a switch 206, which is a switch for controlling current flows, and a wire W. The photovoltaic power generator 201, the electric vehicle 202, the EV charger 203, the storage battery 204, and the like may be referred to as energy resources ER. There are other grid components and energy resources different from the grid components 2 and energy resources ER shown in FIG. 1. Those grid components and energy resources other than the grid components 2 and energy resources ER shown in FIG. 1 will be described later on a necessary basis. The grid components 2 each send data to the energy management controller 1 via a network N or the like.

The businesses 3 carry out power control over the energy resources ER. The businesses 3 include an EV business 301, a data center (DC) business 302, a railway business 303, and a building business 304. The businesses 3, each of which will be described later, are made up of businesses 3 running power supply services, such as the EV business 301, and businesses 3 classified as so-called consumers, such as the data center business 302. The businesses 3 include other businesses different from the EV business 301, the data center (DC) business 302, the railway business 303, and the building business 304. Those businesses other than the businesses 3 shown in FIG. 1 will be described later on a necessary basis. The businesses 3 each receive data from the energy management controller 1 via the network N or the like.

The energy management controller 1 includes a virtual grid generating unit 110 and a deal management unit 150. The virtual grid generating unit 110 generates a virtual grid VG for abstracting and managing, for each grid, the grid component 2 with contract information F1 added thereto. The virtual grid generating unit 110 and the virtual grid VG will be described later. In this embodiment, when a grid is simply mentioned, it indicates an actual grid (power distribution system or power distribution network) that is not the virtual grid VG. The deal management unit 150 manages a deal or the like that the business 3 makes using the virtual grid VG generated by the virtual grid generating unit 110. The deal management unit 150 will be described later.

The grid components 2 are managed as components of the virtual grid VG that is abstracted (modeled) for each grid (which is indicated by a broken line arrow in FIG. 1). The business 3 makes a contract, power deal, and the like via the virtual grid VG (which is indicated by a single-dot chain line arrow in FIG. 1).

### <Hardware Configuration>

FIG. 2 depicts a hardware configuration of the energy management controller 1. The energy management controller 1 includes a memory D1, a central processing unit (CPU) D2, and a storage device D3, such as a hard disk (HD). The energy management controller 1 further includes a communication device D4, such as a network interface card (NIC), an input device D5, such as a keyboard and a mouse, and a display device D6, such as a display.

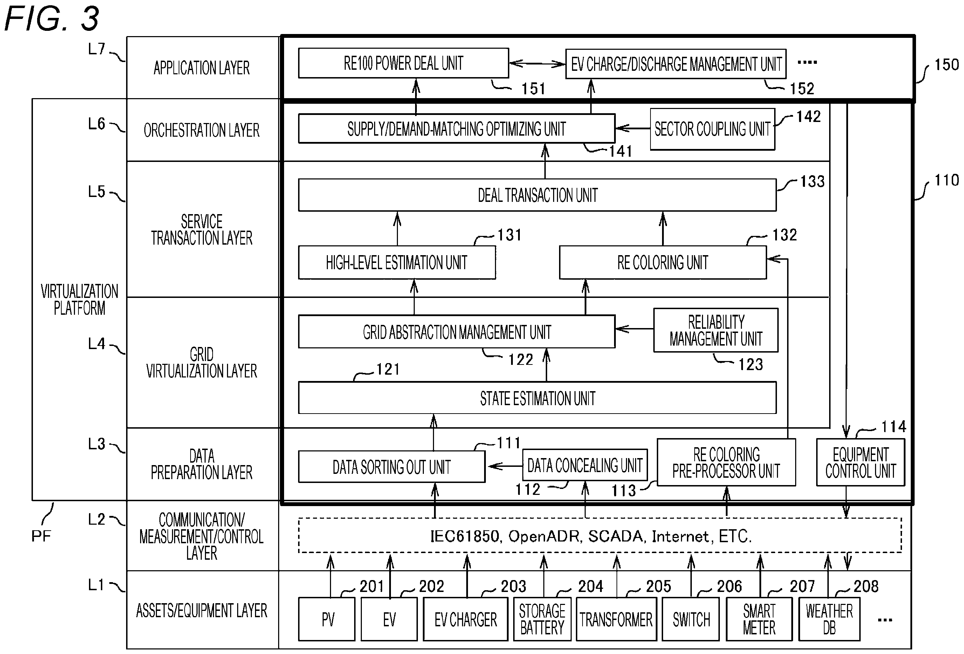

A program stored in the storage device D3 is loaded onto the memory D1, where the loaded program is executed by the CPU D2. As a result, the virtual grid generating unit 110 and the deal management unit 150, which are shown in FIG. 1, are given their specific forms. Units 111 to 113,121 to 123,131 to 133,141 and 142, and 151 and 152 shown in FIG. 3, which make up the virtual grid generating unit 110 and the deal management unit 150, are given their specific forms as well.

### <Layer Configuration>

FIG. 3 depicts a layered configuration of the energy management control system Z. FIG. 1 will be referred to on a necessary basis. In the example shown in FIG. 3, the energy management control system Z includes an assets/equipment layer L1, a communication/measurement/control layer L2, a data preparation layer L3, a grid virtualization layer L4, a service transaction layer L5, an orchestration layer L6, and an application layer L7. Among these layers, the data preparation layer L3, the grid virtualization layer L4, the service transaction layer L5, the orchestration layer L6, and the application layer L7 belong to the energy management controller 1. The data preparation layer L3, the grid virtualization layer L4, the service transaction layer L5, and the orchestration layer L6 belong also to the virtual grid generating unit 110. The application layer L7 belongs also to the deal management unit 150. The virtual grid generating unit 110, when it is viewed from the viewpoint of platforms, is referred to as a virtualization platform PF.

### (Assets/Equipment Layer L1)

As shown in FIG. 3, the assets/equipment layer L1 includes the grid components 2, such as the energy resources ER, a power controller, and a measuring device. In other words, among the grid components 2 belonging to the assets/equipment layer L1 shown in FIG. 3, the photovoltaic power generator 201 (PV), the electric vehicle (EV) 202, the EV charger 203, and the storage battery 204 belong to the category of the energy resources ER shown in FIG. 1. The transformer 205 and the switch 206, which is a switch for controlling current flows, belong to the category of the power controller. The smart meter 207 belongs to the category of the measuring device. Besides, the assets/equipment layer L1 further includes a weather DB 208, in addition to the energy resources ER, the power controller, and the measuring device.

### (Communication/Measurement/Control Layer L2)

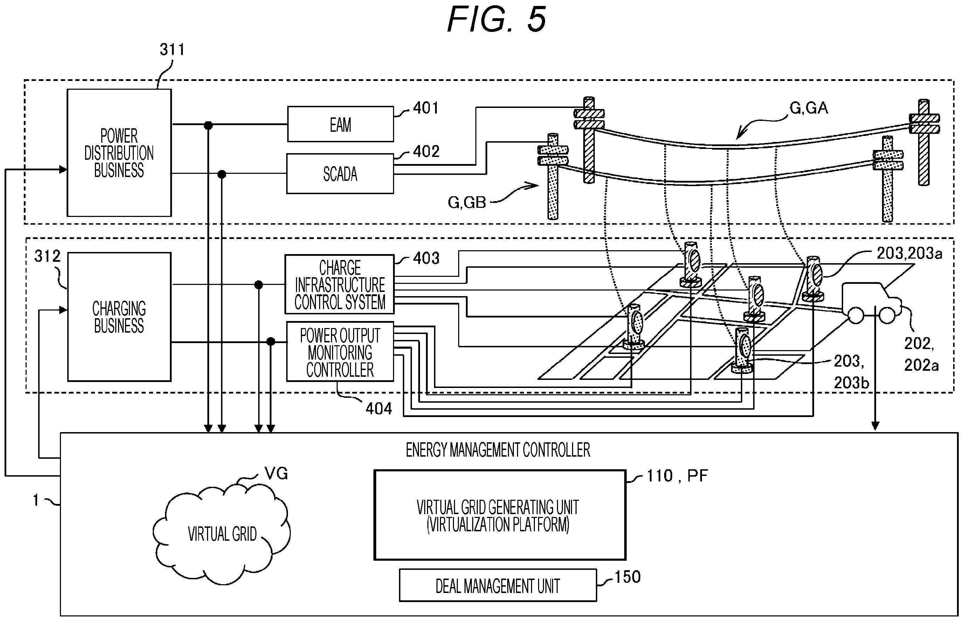

The communication/measurement/control layer L2 is a layer including a communication means, a measuring means, and a control means. The communication/measurement/control layer L2 includes communications conforming to the IEC 61850 communication protocol or the OpenADR communication protocol and communications via the Internet. The communication/measurement/control layer L2 includes also control of the energy resources ER by supervisory control and data acquisition (SCADA) 402 (see FIG. 5). In other words, data, etc., on the grid components 2 belonging to the assets/equipment layer L1 are sent to the virtualization platform PF through the communication/measurement/control layer L2. The network N in FIG. 1 too belongs to the communication/measurement/control layer L2.

### (Data Preparation Layer L3)

The data preparation layer L3 in the virtualization platform PF includes a data sorting out unit 111, a data concealing unit 112, an RE coloring preprocessor unit 113, and an equipment control unit 114. The data sorting out unit 111 carries out a process, such as interpolation, on each of pieces of data collected from the assets/equipment layer L1 via the communication/measurement/control layer L2. The data concealing unit 112 conceals the data source of data acquired with a request from a business that the data source, which is the business, be not revealed, so that no external party comes to know the data source. Data concealment is carried out by deleting or encrypting information on the data source.

The RE coloring preprocessor unit 113 generates and adds header information to data collected from the assets/equipment layer L1. The added header information is information on power attributes (information on coloring), such as information on when and where power is generated and on whether power is renewable energy. The equipment control unit 114 will be described later.

### (Grid Virtualization Layer L4)

The grid virtualization layer L4 includes a state estimation unit 121, a grid abstraction management unit 122, and a reliability management unit 123. The state estimation unit 121 compares pieces of data interpolated by the data sorting out unit 111 with each other and then carries out data interpolation and the like again. The grid abstraction management unit 122 virtualizes and abstracts a configuration of a grid (grid components 2), using the data interpolated by the state estimation unit 121. Hence the virtual grid VG is generated. Virtualization and abstraction of a grid configuration and the virtual grid VG will be described later. The reliability management unit 123 monitors the generated virtual grid VG to see if it is a proper one or not.

### (Service Transaction Layer L5)

The service transaction layer L5 includes a high-level estimation unit 131, an RE coloring unit 132, and a deal transaction unit 133. The high-level estimation unit 131 makes an estimation of power that can be supplied in the virtual grid VG, and optimizes operations of the energy resource ER. The RE coloring unit 132 carries out coloring of power and data. Coloring will be described later. The deal transaction unit 133 compares the contract content of each consumer with the characteristics of the virtual grid VG, and properly couples the consumer with the virtual grid VG.

### (Orchestration Layer L6)

The orchestration layer L6 includes a supply/demand matching optimizing unit 141 and a sector coupling unit 142. The supply/demand matching optimizing unit 141 optimizes the coupling between the virtual grid VG and the business 3 that is carried out by the deal transaction unit 133. Optimization of coupling between the virtual grid VG and the consumer will be described later. The sector coupling unit 142 controls power distribution to a consumer running a different type of business, such as a business different from the business 3 coupled to the virtual grid VG. Processing by the sector coupling unit 142 will be described later.

### (Application Layer L7)

As described above, the application layer L7 corresponds to the deal management unit 150 in FIG. 1, and includes the RE100 power deal unit 151 and the EV charge/discharge management unit 152. The application layer L7 (deal management unit 150) may include a unit other than the RE100 power deal unit 151 and the EV charge/discharge management unit 152. The RE100 power deal unit 151 manages deals on power as RE100, i.e., 100% renewable energy. The EV charge/discharge management unit 152 carries out charge/discharge management and the like on the EV charger 203, based on the virtual grid VG.

The EV charge/discharge management unit 152 controls a grid component 2 of the assets/equipment layer L1, such as the EV charger 203, via the equipment control unit 114 of the data preparation layer L3. It should be noted that among units making up the application layer L7, a unit that controls the grid component 2 via the equipment control unit 114 is a specific unit, e.g., the EV charge/discharge management unit 152, that carries out control of the grid component 2. The RE power deal unit 151, on the other hand, makes up the application layer L7 but manages power deals. A unit like the RE power deal unit 151 makes a deal directly with the business 3 without an intermediary action by the equipment control unit 114.

For example, when the EV charge/discharge management unit 152 controls the EV charger 203, the EV charge/discharge management unit 152 actually controls a virtualized version of the EV charger 203. The equipment control unit 114 converts an instruction to the virtualized unit, the instruction being sent from the application layer L7, into an instruction to the real grid component 2. The equipment control unit 114 then controls the grid component 2 of the assets/equipment layer L1 via the communication/measurement/control layer L2.

In this manner, the virtualization platform PF (virtual grid generating unit 110) is divided into four layers: the data preparation layer L3, the grid virtualization layer L4, the service transaction layer L5, and the orchestration layer L6. As a result of dividing the virtualization platform PF into a plurality of layers in such a manner, a change in a specific layer does not require a change in other layers. This allows efficient programming and updating.

### <Flowchart>

### (Data Preparation Layer L3)

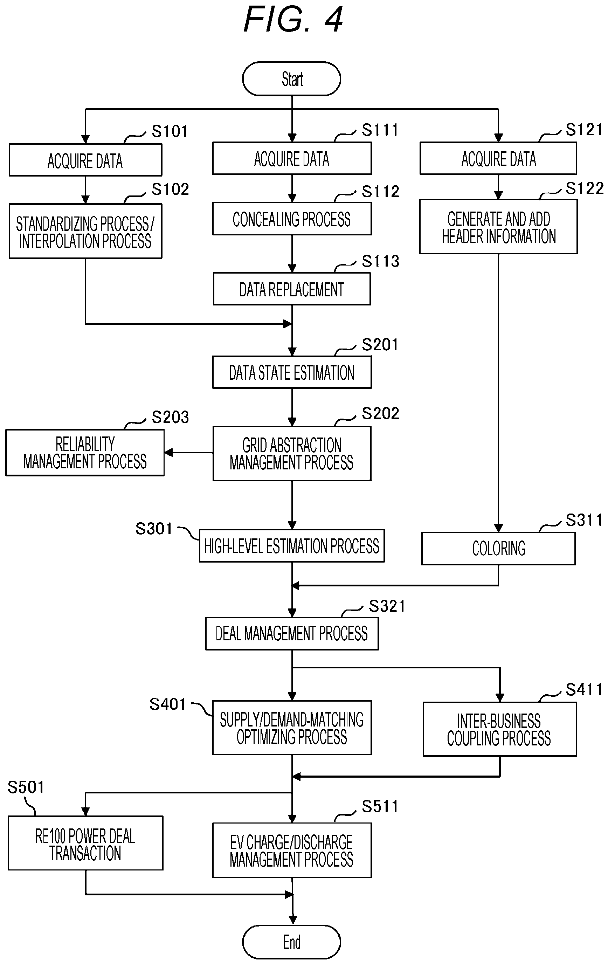

FIG. 4 is a flowchart showing a processing procedure by the energy management control system Z according to this embodiment. FIGS. 1 and 3 will be referred to on a necessary basis. First, the data sorting out unit 111 acquires data from each of the grid components 2 belonging to the assets/equipment layer L1, via the communication/measurement/control layer L2 (S101). The data includes physical data, such as an amount of power. In this process, the acquired data is converted into a data format that is usable in the virtual grid VG and is managed as such data. The data sorting out unit 111 then carries out a standardization process, an interpolation process, and the like on each piece of data (S102).

The data concealing unit 112 too acquires data from each of the grid components 2 belonging to the assets/equipment layer L1, via the communication/measurement/control layer L2 (Sill). The data concealing unit 112 then carries out a concealment process on the acquired data (S112). In this process, the data concealing unit 112 deletes or encrypts the data source of data acquired from a business that makes a request for concealing the data source. Thereafter, the data concealing unit 112 replaces the data subjected to the concealment process with data held by the data sorting out unit 111 (S113).

Further, the RE coloring preprocessor unit 113 too acquires data from each of the grid components 2 belonging to the assets/equipment layer L1, via the communication/measurement/control layer L2 (S121). The RE coloring preprocessor unit 113 then generates header information for each piece of the acquired data, and adds the generated header information to each piece of the data (S122). The header information includes information on power attributes (information on coloring), such as information on when and where power is generated and on whether power is renewable energy.

### (Grid Virtualization Layer L4)

The state estimation unit 121 makes state estimation on data held by the data sorting out unit 111 when necessary (S201). At step S201, for example, the state estimation unit 121 compares pieces of data held by the data sorting out unit 111 with each other, and estimates and interpolates missing data.

Subsequently, the grid abstraction management unit 122 carries out a grid abstraction management process, based on data held by the state estimation unit 121 (S202). At step S202, the grid abstraction management unit 122 collectively virtualizes (abstracts) and manages the grid components 2, such as the photovoltaic power generator 201, the electric vehicle 202, and the wire W, for each grid. Information on the grid components 2 virtualized in such a manner is referred to as a virtual grid VG. The virtual grid VG includes the capacity, etc., of the wire W as information on the wire W. As the capacity of the wire W, the capacity of the wire W connecting each grid component 2 may be managed or only the maximum capacity or the like may be managed. In addition, the grid abstraction management unit 122 includes contract information F1 on each business 3 in the virtual grid VG. The contract information F1 will be described later. Further, the grid abstraction management unit 122 includes also information on the scale of a substation, which is one of the grid components 2, in the virtual grid VG. As described above, the grid abstraction management unit 122 generates the virtual grid VG for each grid.

Subsequently, the reliability management unit 123 carries out a reliability management process (S203). At step S203, the reliability management unit 123 monitors the virtual grid VG generated by the virtualization and abstraction by the grid abstraction management unit 122 to see whether the virtual grid VG is a proper one, using data on the actual grid. As a result, characteristic values (power flow, voltage, etc.) of the virtual grid VG at each point of time can be properly estimated and managed to ensure system reliability.

### (Service Transaction Layer L5)

Thereafter, the high-level estimation unit 131 carries out a high-level estimation process, using the virtual grid VG generated by the virtualization and abstraction by the grid abstraction management unit 122 (S301). At step S301, using the virtual grid VG generated by the virtualization and abstraction by the grid abstraction management unit 122, the high-level estimation unit 131 estimates power that can be supplied by each grid or optimizes operations of the energy resources ER. For example, the high-level estimation unit 131 predicts a change in renewable energy, based on weather forecast data or the like. The high-level estimation unit 131 predicts also a time-dependent change and positional change in power demand that are caused the movement of the electric vehicle 202. Making such predictions allows providing an optimal service that meets the needs of a consumer.

The RE coloring unit 132 carries out coloring of power and data, based on header information added to each piece of data by the RE coloring preprocessor unit 113 (S311). Coloring is a process of sorting out power and data in accordance with a fact that the power and data are those of renewable energy or are not those of renewable energy. By this coloring process, a service necessary for RE coloring can be provided to a consumer.

Subsequently, the deal transaction unit 133 carries out a deal management process (S321). At step S321, the deal transaction unit 133 compares the characteristics or the like of the virtual grid VG, the characteristics being estimated by the high-level estimation process, information on the coloring carries out by the RE coloring unit 132, and the contract content of a consumer, and couples the virtual grid VG to the consumer. It should be noted that not only the connection between the consumer and the virtual grid VG but also direction connection, i.e., peer-to-peer connection may be established. For example, to a consumer who requests RE 100, an energy resource ER for providing renewable energy, such as the photovoltaic power generator 201, may be connected directly. In this case, a unit of virtualized energy resources ER for renewable energy (e.g., the photovoltaic power generator 201, the storage battery 204, etc., that are grouped into a single unit) may be coupled to the consumer.

### (Orchestration Layer L6)

The supply/demand matching optimizing unit 141 executes overall optimization on a plurality of consumers, thus executing a supply/demand matching optimization process (S401). At step S401, the supply/demand matching optimizing unit 141 adjusts matching between the consumer and the virtual grid VG coupled at step S321. For example, when the customer connects to the virtual grid VG in an excessive power transmission capacity that exceeds the maximum capacity of the wire W, the supply/demand matching optimizing unit 141 diverts part of power transmission traffic to another virtual grid VG with a free resource or adjusts an energy resource ER to which the consumer connects. When the consumer's request cannot be met, the supply/demand matching optimizing unit 141 informs the consumer that the consumer's request cannot be met, and establishes a connection as close as possible to the connection the consumer requests. For example, when the energy resource ER for RE100 that can be connected to the consumer who requests RE 100 is insufficient, the supply/demand matching optimizing unit 141 diverts part of power transmission traffic to the consumer to another virtual grid VG or establishes a connection through which insufficient power as RE100 is compensated with power as non-RE 100. The supply/demand matching optimizing unit 141 includes information on the consumer connected to the virtual grid VG (including information on a contract made by the consumer), in the virtual grid VG. Carrying out such a supply/demand matching optimization process allows an efficient power deal.

Subsequently, the sector coupling unit 142 carries out an inter-business coupling process of coupling to a different type of business (S411). A different type of business refers to a business different from the businesses 3 connected to the virtual grid VG. It refers to, for example, an electric vehicle 202 that is charged outside the target grid (virtual grid VG) or a person who drives the electric vehicle 202. Based on past data and the like, the sector coupling unit 142 predicts the movement of the different type of business and estimates power to be supplied to the different type of business, and delivers the prediction results to the supply/demand matching optimizing unit. The inter-business coupling process facilitates coupling to a different type of business in power distribution, such as supply of power to a different type of business. The sector coupling unit 142 may optimize power distribution and the like by combining demand for power with demand for other elements, such as human resources and physical distributions, that are involved in the inter-business coupling process.

### (Application Layer L7)

The RE100 power deal unit 151 carries out a power deal transaction (RE100 power deal transaction) to a consumer who requests RE100, using information on coloring (coloring information) or the like (S501). The EV charge/discharge management unit 152 carries out an EV charge/discharge management process of managing power supply to the EV charger 203 and discharging (power supply to other consumers) (S511). As described above, control by the EV charge/discharge management unit 152 is carried out via the equipment control unit 114.

### <Easing Limitations on Power Distribution Network>

FIG. 5 depicts an example of power demand control in the virtual grid VG. This process corresponds to the inter-business coupling process that the sector coupling unit 142 carries out at step S411 of FIG. 4. In FIG. 5, a grid indicated by oblique lines belongs to a grid GA, and a grid indicated by dots belongs to a grid GB. In the example shown in FIG. 5, each of these grids G is an actual grid G that is not the virtual grid VG, and includes a power distribution network and EV chargers 203 for charging the electric vehicle 202. The power distribution networks and the EV chargers 203 are the grid components 2 shown in FIG. 1.

A power distribution business 311, which is one of the businesses 3, manages an enterprise asset management or EAM (integrated maintenance system) 401. Using a SCADA 402, the power distribution business 311 monitors and controls the amount of power in the power distribution network making up the grid G. The energy management controller 1 acquires information on respective locations of power distribution installations in the power distribution network, from the EAM 401. The energy management controller 1 acquires also measurement information (current values) and control signals, from the SCADA 402. The EAM 401 and the SCADA 402 belong to the communication/measurement/control layer L2 of FIG. 3.

A charging business 312, which is one of the businesses 3, controls and manages the use status of each EV charger 203 and the state of the same, using a charge infrastructure control system 403. The charging business 312 monitors and controls output from the EV charger 203, using an output monitoring controller 404. The energy management controller 1 acquires use information on the EV charger 203 and an installation state, from the charge infrastructure control system 403. The energy management controller 1 acquires also measurement signals and control signals, from the output monitoring controller 404. The charge infrastructure control system 403 and the output monitoring controller 404 belong to the communication/measurement/control layer L2 of FIG. 3.

An electric vehicle 202a sends charge reservation information to the energy management controller 1. The charge reservation information includes, for example, a schedule of charging the electric vehicle 202a with an EV charger 203a.

The high-level estimation unit 131 of the virtual grid generating unit 110 (virtualization platform PF) estimates charge power consumption in the grid G, based on the charge reservation information on the electric vehicle 202a. This estimation is made based on measurement information (current values) acquired from the SCADA 402, on a past use history of the EV charger 203 based on use information acquired from the charge infrastructure control system 403, and on recent shifts in use of the EV charger 203. The estimation is made to estimate, for example, charge power that will be consumed scores of hours later. By collectively managing the plurality of grids G individually as virtual grids VG, power can be controlled between the grids G, as shown in FIG. 5. Specifically, there is a conventional limitation that power control can be carried out only in each grid G. According to this embodiment, however, power control between the plurality of grids G can be carried out on a grid-by-grid basis. This eases the conventional limitation. In addition, for example, by estimating charge power that will be consumed scores of hours later, the electric vehicle 202a can be guided to a charge location in advance. In this manner, according to the energy management control system Z of this embodiment, efficiently charging the electric vehicle 202a becomes possible. In addition, coupling to a different type of business, such as the electric vehicle 202 charged outside the target grid and a person who drives the electric vehicle 202, in power distribution becomes also possible.

The energy management controller 1 can specify the EV charger 203 for the electric vehicle 202a, based on a prediction. For example, it is assumed, as in the above case, that a charge reservation for the electric vehicle 202a has been made first to set a schedule that the electric vehicle 202a will be charged with the EV charger 203a belonging to the grid GA. However, based on past measurement information, charge reservations for other electric vehicles 202, and the like, the sector coupling unit 142 predicts that the grid GA may possibly be in an overload state at the time of charging the electric vehicle 202a. In such a case, the sector coupling unit 142 prompts the driver of the electric vehicle 202a to charge the electric vehicle 202a with an EV charger 203b belonging to the grid GB.

The high-level estimation unit 131 can make an estimation of power consumption in an area of a certain scale, using a feeder or the like, based on position information on the power distribution installations, the position information being acquired from the EAM 401.

The energy management controller 1 sends a power consumption estimation based on the results of estimations by the sector coupling unit 142 and the high-level estimation unit 131, to the power distribution business 311. Based on the incoming power consumption estimation the power distribution business 311 controls power supply and power demand in the grid G. Meanwhile, the EV charge/discharge management unit 152 of the energy management controller 1 sends charger availability information based on the power consumption estimation by the high-level estimation unit 131, to the charging business 312. As described above, the EV charge/discharge management unit 152 sends the charger availability information to a virtualized version of the charging business 312 generated in the virtual grid VG. The equipment control unit 114 converts the recipient of the charger availability information (virtualized version of the charging business 312) into the actual charging business 312, and sends the charger availability information to each charging business 312. Receiving the charger availability information, the charging business 312 controls the availability of the EV charger 203, based on the charger availability information.

According to the conventional technology including the VPP, the capacity of a power distribution network in the actual grid G may become locally too insufficient in terms of time and location to meet power demand that sharply increases in a short period as a result of the movement of the electric vehicle 202 or the like.

In this embodiment, the sector coupling unit 142 of the virtualization platform PF estimates local power demand in the grid G through coupling and predictions based on charge reservation information and the like sent from the electric vehicle 202. As a result, dynamic power distribution, such as switching the grid G for charging, can be performed. Hence the accuracy of power distribution control can be improved and overloading the power distribution network can be avoided as well. For example, the electric vehicle 202 may be guided from a grid G with no available EV charger 203 to a grid G with an available EV charger 203. Such dynamic power distribution reduces loss of business opportunities by the charging business 312 and, on contrary, creates business opportunities for the charging business 312.

### <Coloring>

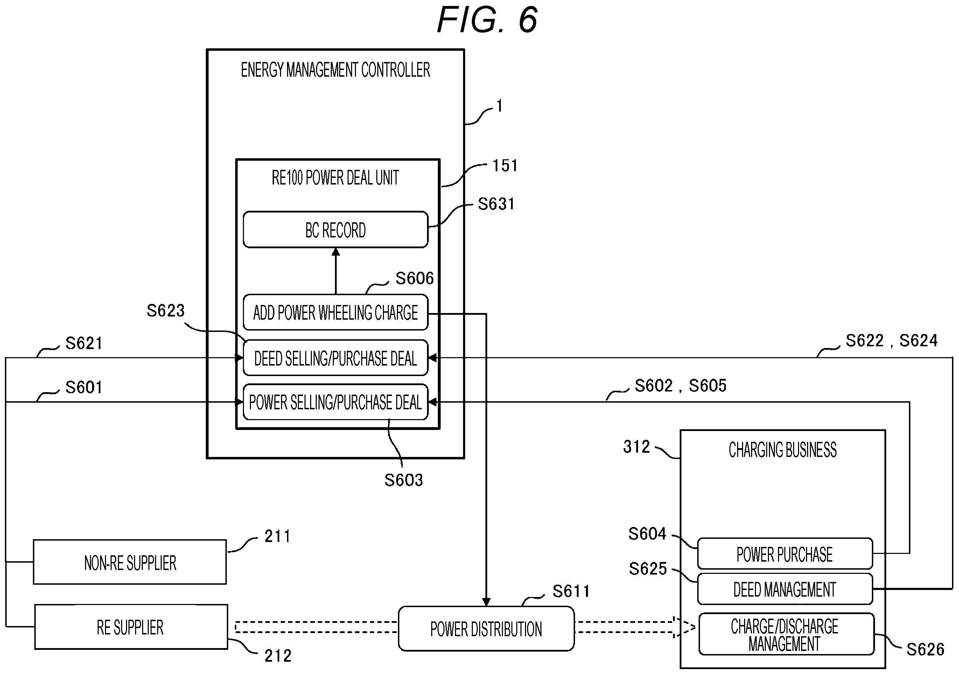

FIG. 6 depicts an example of the energy management control system Z, the example being related to a coloring process. The example of FIG. 6 shows the transaction of a power selling deal between a renewable energy supplier (RE supplier 212), a non-renewable energy supplier (non-RE supplier 211), and the charging business 312. It is assumed in this example that the charging business 312 requests a deal on RE100, i.e., 100% renewable energy. The RE supplier 212 and the non-RE supplier 211 belong to the businesses 3 in FIG. 1.

The renewable energy supplier (RE supplier 212) and the non-renewable energy supplier (non-RE supplier 211) send power selling bid information to the energy management controller 1 (S601). The charging business 312 sends power purchase bid information to the energy management controller 1 (S602). The power purchase bid information includes information (contract) indicating power as RE100 is requested. The RE100 power deal unit 151 of the energy management controller 1 compares the power selling bid information with the power purchase bid information, and puts a power deal that meets bid conditions into effect (S603). In this case, because the charging business 312 requests RE 100, the RE100 power deal unit 151 puts a deal between the renewable energy supplier (RE supplier 212) and the charging business 312 into effect. The charging business 312 thus purchases power (S604) and pays a power purchase charge according to the closed deal (S605). At this time, the RE100 power deal unit 151 adds a power wheeling charge to the power purchase charge (S606).

According to the closed deal, the renewable energy supplier (RE supplier 212) distributes power to the charging business 312 (S611). While distributing power, the RE supplier 212 sends selling bid information (deed selling bid information) on a deed guaranteeing that distributed power is RE 100 (100% renewable energy), to the energy management controller 1 (S621). Such a deed is sent to the energy management controller 1 as power distribution is carried out. As a result, coloring is carried out.

Meanwhile, the charging business 312 sends purchase bid information (deed purchase bid information) on a deed, to the energy management controller 1 (S622). The RE100 power deal unit 151 makes a deed selling/purchase deal (S623), at which the charging business 312 purchases the deed (S624) and then manages the purchased deed (S625).

Using distributed power, the charging business 312 carries out charge/discharge management, such as charging the EV charger 203 or discharging power from the EV charger 203 when necessary (S626). Step S631 will be described later.

By carrying out such processes, the energy management control system Z performs power coloring (virtually separating power pools), utilizing a blockchain. As a result, distributed power deals with transparency can be implemented at low cost. In other words, the presence of deeds enables power deals (distributed power deals) with transparency. In addition, the power purchase process and deed purchase process can be simplified, which allows cost reduction. Through coloring with such effects, various needs of consumers who request charging with power as RE100 can be met.

### (Data Type to Which Blockchain Is Applied)

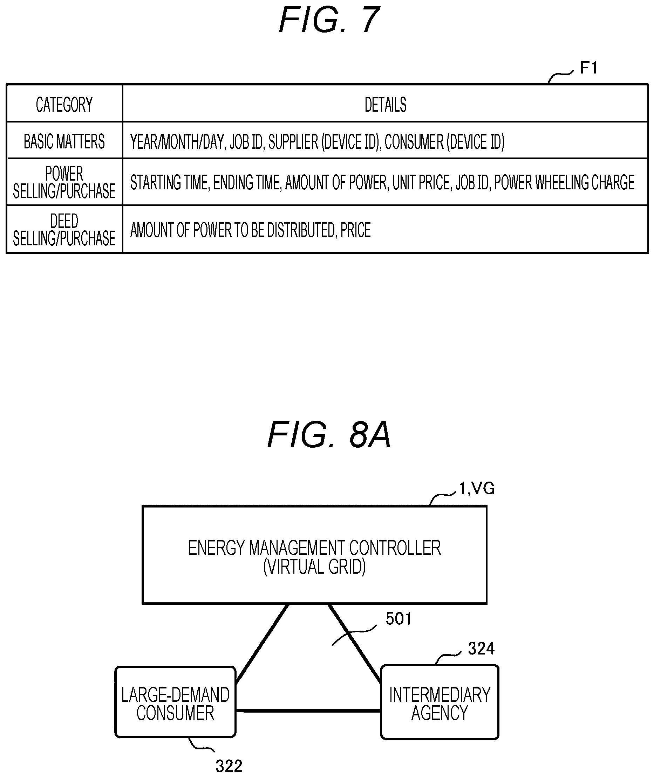

FIG. 7 depicts an example of data types used in the blockchain used in this embodiment. As shown in FIG. 7, data types used in the blockchain include basic matter information indicating year/month/day, a job ID, a supplier (device ID), and a consumer (device ID). The data types used in the blockchain include also power deal information indicating a starting time, an ending time, an amount of power, a unit price, a job ID, a power wheeling charge, and the like. The starting time is the time to start power distribution, and the ending time is the time to end power distribution. The data types used as blockchain record data further include deed selling/purchase information indicating an amount of power to be distributed, a unit price, and the like. These pieces of data are recorded in the storage device D3 of the energy management controller 1, as contract information F1 (BC record at S631 in FIG. 6). By recording and managing such contract information F1 in the storage device D3, information on contracts is also managed in the virtual grid VG. In this manner, information on contracts is also managed as information on the virtual grid VG. This makes power deal management easy.

The example of power deals based on RE100-based coloring has been described herein. The form of power deals is, however, not limited to this. For example, power deals based on cost-based coloring may also made. Carrying out processes using the data types shown in FIG. 7 makes it possible to achieve both goals: allowing flexible power supply in response to changes in consumers' needs, such as use of RE100 and cost reduction, and supporting consumers' decarbonation efforts while improving consumers' convenience.

### (Business Models)

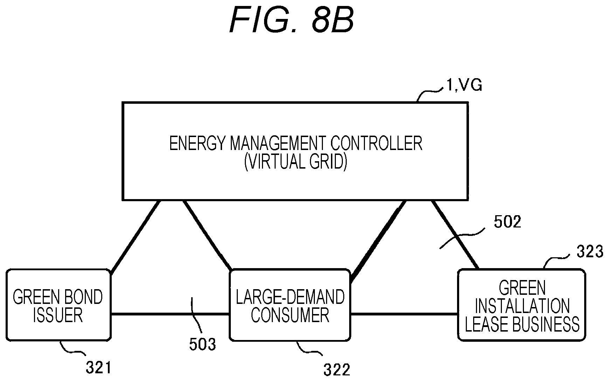

FIGS. 8A and 8B depict business models using virtual grids VG. FIGS. 8A and 8B show an example of business models involving a virtual grid VG, a green bond issuer 321, a large-demand consumer 322, a green installation lease business 323, and an intermediary agency 324. It should be noted that the intermediary agency 324 includes an aggregator, a power distribution business, and the like, and provides intermediary services on the power trading market, such as an intermediary service between the business 3 as the power supply side, and a consumer and an intermediary service needed for power distribution.

First, as shown in FIG. 8A, the large-demand consumer 322 and the intermediary agency 324 carry out a service 501 via the virtual grid VG (energy management controller 1). The service 501 carried out via the virtual grid VG facilitates power assets management, thus allowing an improvement in capital efficiency and a reduction in debt repayment risks. As shown in FIG. 8B, the large-demand consumer 322 and the green installation lease business 323 carry out a service 502 via the virtual grid VG. The service 502 is an installation management service carried out via the virtual grid VG to manage a green installation. This service allows optimization of green installation lease business. As shown in FIG. 8B, the green bond issuer 321 and the large-demand consumer 322 carry out a service 503 via the virtual grid VG. By utilizing coloring of the virtual grid VG, the service 503 allows issue of reports with transparency, thus improving the value of green bond financing.

In this manner, by carrying out services via the virtual grid VG, an open interface between the businesses 3 and the system is defined, which allows creation on of an ecosystem.

### (Application Example of Virtual Grid VG)

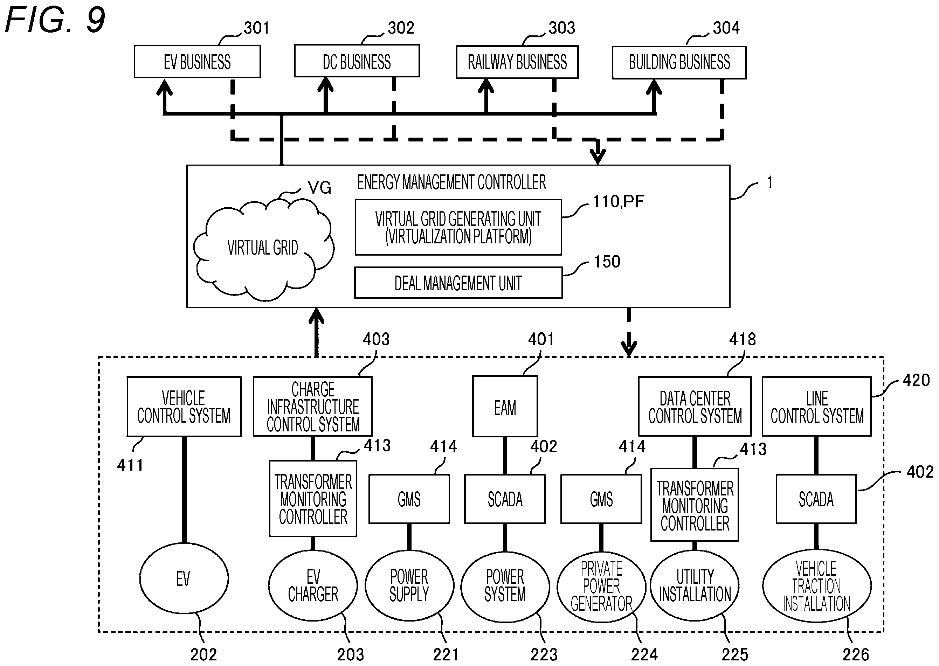

FIG. 9 depicts a specific example in which the virtual grid VG is applied. FIG. 3 will be referred to, on a necessary basis. The EV business 301 collects information on the electric vehicle (EV) 202 belonging to the assets/equipment layer L1, via the vehicle control system 411 belonging to the communication/measurement/control layer L2 and the virtual grid VG (energy management controller 1). The EV business 301 collects also information on the EV charger 203, which is a physical device, via a transformer monitoring controller 413 and the charge infrastructure control system 403, which belong to the communication/measurement/control layer L2, and the virtual grid VG. Based on the collected information, the EV business 301 then estimates a charge state of the electric vehicle 202 and monitors a group (fleet) of electric vehicles 202 to optimize charging/discharging of the electric vehicles 202. In addition, the EV business 301 diverts renewable energy collected from the electric vehicle 202 to other businesses, thus allowing utilization of renewable energy. Services carried out via the virtual grid VG facilitate charge/discharge management, which allows a reduction in the cost of charging/discharging of the electric vehicles 202. The information on the EV charger 203 is sent also to the charging business 312 (see FIG. 5), which uses the information to control charging/discharging of the EV charger 203 and to prompt the driver of the electric vehicle 202 to charge the electric vehicle 202 with an optimum EV charger 203, as indicated in FIG. 5.

A data center is a facility that consumes a large amount of power. The data center (DC) business 302, therefore, needs to gather a greater amount of power to the data center. The data center business 302 thus acquires power from a power supply 221 and a private power generator 224 via a generation management system (GMS) 414 or acquires power from a power system 223 via the SCADA 402 or the EAM 401. In addition, the data center business 302 collects power consumption information and the like on a utility installation 225 in the data center via the transformer monitoring controller 413 and a data center control system 418, thereby carrying out power monitoring at the data center.

The railway business 303 collects information on a vehicle traction installation 226 and the like, via the SCADA 402 and a line control system 420 that belong to the communication/measurement/control layer L2. The railway business 303 collects also information on the power supply 221 via the GMS 414. Further, the railway business 303 collects information on the power system 223 via the SCADA 402 and the EAM 401 that belong to the communication/measurement/control layer L2. Based on the collected information, the railway business 303 executes dynamic switching to a low-cost power supply or implements on-demand railway service.

The building business 304 acquires power from the private power generator 224 or acquires power from the power system 223 via the SCADA 402 and the EAM 401. The building business 304 makes a prediction of the flow of people and weather, based on information collected from a flow-of-people monitoring device (not illustrated), the weather DB 208 (see FIG. 1), and the like, and executes control of cooling/heating equipment (not illustrated) and optimization of air conditioning control, based on the prediction results.

### <Details of Power Control>

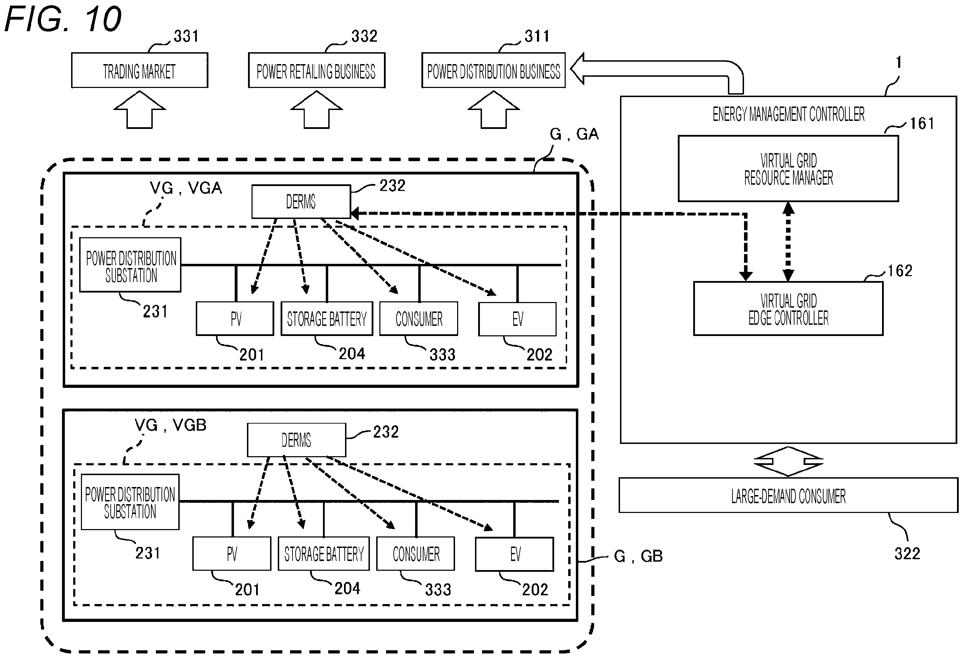

FIG. 10 depicts an example of power control using the virtual grid VG. As described above, the energy management controller 1 manages the virtual grids VG grid by grid, that is, manages each grid GA and grid GB (virtual grids VGA and VGB). As described above, in each virtual grid VG, pieces of information on the photovoltaic power generator (PV) 201, the storage battery 204, the electric vehicle (EV) 202, the consumer 333, the power distribution substation 231, and the capacity of the wire W (see FIG. 1) are collectively managed. In FIG. 10, the energy management controller 1 includes a virtual grid resource manager 161 and a virtual grid edge controller 162. The virtual grid resource manager 161 corresponds to most of the virtual grid generating unit 110 and the deal management unit 150 of FIG. 1. The virtual grid edge controller 162 has functions of terminal data acquisition and control data transmission, which make up part of the functions the deal management unit 150 has.

The virtual grid edge controller 162 controls power supply from each grid G, by using a distributed energy resource management system (DERMS) 232 installed in the grid G.

By carrying out such control over the grid G, the energy management control system Z provides a power trading market 331 with information on power. In addition, the energy management control system Z provides a power retailing business 332 with information on power supply at each grid G. Further, the energy management control system Z provides the power distribution business 311 with information on adjustment of power to be distributed.

According to the conventional technology including the virtual power plant, it has been difficult to construct a power infrastructure capable of responding to a sharp change in power demand in the grid G, such as introduction of numbers of new photovoltaic power generators 201 and electric vehicles 202. According to the virtual grid VG of this embodiment, the grid components 2 are managed collectively and power distribution installations (the scale of the power distribution substation 231 and the wire capacity) are managed grid G by grid G. In this manner, physical and electrical limitations in power supply are managed grid G by grid G. As a result, for example, connection of the consumer 333 to each grid G can be adjusted according to an amount of power the grid G can supply and to conditions of the power distribution installations, as indicated at step S401 of FIG. 4. In this manner, according to this embodiment, more efficient use of the power infrastructure and mutual energy diversion between a plurality of grids G can be achieved, which allows optimization of the power infrastructure as a whole.

In addition, through the virtual grid VG, installations of the power distribution network and the grid components 2 are virtualized grid G by grid G. Optimizing mutual energy diversion between the plurality of grids G, therefore, can be made easy. As a result, the large-demand consumers 322, such as the charging business 312, the data center business 302, and the railway business 303, can easily guarantee that supplied power is RE 100 and therefore can improve their management values.

### (Coupling between Energy Management Control System Z and Smart Grid SG in Power Distribution)

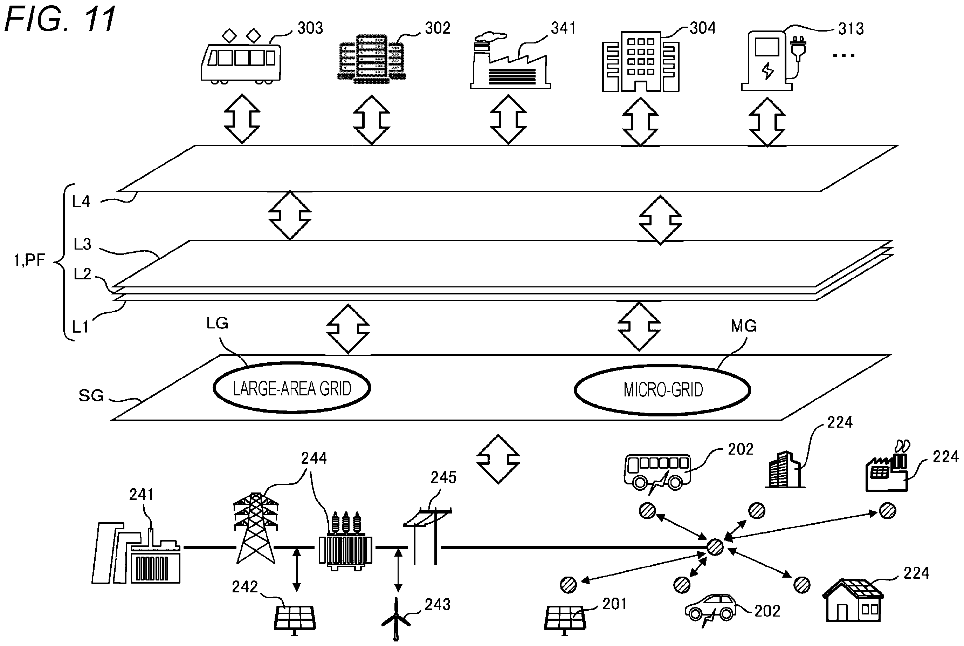

FIG. 11 is a conceptual diagram showing coupling between the energy management control system Z and a conventional smart grid SG in power distribution. The example of FIG. 11 shows power systems including a large-scale centralized power source 241, such as a power plant, a mega-solar 242, a wind power generator 243, a high-voltage power transmission system 244, a power distribution system 245, and a small-scale power source. Small-scale power sources include the photovoltaic power generator 201 installed by an individual, and the electric vehicle 202 Small-scale power sources may include also the storage battery 204 and a hydrogen battery. Small-scale power sources may further include the private power generator 224 owned by an individual or installed in a building, a factory, or the like. These power systems and power sources are included in the grid components 2 of FIG. 1 and are included in the assets/equipment layer L1 of FIG. 3.

The high-voltage power transmission system 244 transmits high-voltage power generated by the large-scale centralized power source 241, the mega-solar 242, and the wind power generator 243. The power distribution system 245 distributes high-voltage power transmitted by the high-voltage power transmission system 244, to consumers, and distributes power supplied by the small-scale power source, to consumers.

In the smart grid SG, demand and supply of power in the power systems are managed and controlled. To the smart grid SG, a grid network in which resources are interconnected is applied, the resources including a wide-area grid LG, which is a wide-area interconnected system, and a microgrid MG, which is a narrow-area interconnected system. As a system subjected to power management by such a smart grid SG, a virtual power plant (VPP) or the like is used. As systems subjected to power management by the smart grid SG, a renewable energy interconnected system, a consumer power producer and supplier (PPS), or the like may also be used.

In the example of FIG. 11, the virtualization platform PF of this embodiment is set as a superior system to the smart grid SG. In other words, the virtualization platform PF (energy management controller 1) manages the smart grid SG as the virtual grid VG. As described above, the virtualization platform PF (energy management controller 1) carries out virtualization (digitization) of the grid components 2 and carries out also digital orchestration for achieving green power and power-saving. The functions of virtualizing the grid components 2 and carrying out digital orchestration are set in a single platform, as shown in FIG. 3. This strengthens digital-based coupling in power distribution.

The business 3, such as the railway business 303, the data center business 302, the factory 341, the building business 304, or the EV station 313, collects data via the virtualization platform PF (virtual grid VG). In addition, the business 3 controls power distribution in the power system via the virtualization platform PF (virtual grid VG) .

In this embodiment, power coloring to classify power according to whether power is renewable energy has been described. However, as described above, power coloring based on cost sizes may also be carried out.

The present invention is not limited to the above embodiment but includes various modifications. For example, the above embodiment has been described in detail for easy understanding of the present invention, and is not necessarily limited to an embodiment including all constituent elements described above.

Some or all of the above constituent elements, functions, the units 111 to 113,121 to 123,131 to 133,141 and 142, and 151 and 152 that make up the virtual grid generating unit 110 and deal management unit 150, the storage device D3, and the like may be packaged into, for example, an integrated circuit, that is, provided in the form of hardware. As indicated in FIG. 3, the above constituent elements, functions, and the like may be provided in the form of software as a result of the processor, such as the CPU D2, interpreting and executing programs for implementing individual functions. Information, such as programs, tables, and files, for implementing the functions are stored in an HD and may also be stored in a recording device, such as the memory D1 or a solid state drive (SSD), or in a recording medium, such as an integrated circuit (IC) card, a secure digital (SD) card, or a digital versatile disc (DVD). In the above embodiment, a group of control lines/data lines considered to be necessary for description are illustrated, and all control lines/data lines making up the product are not always illustrated. It is safe to assume that, actually, almost the entire constituent elements are interconnected.

### Reference Signs List

1: energy management controller (power management device), 110: virtual grid generating unit, 113: RE coloring preprocessor unit (power type management unit), 131: high-level estimation unit (prediction unit), 132: RE coloring unit (power type management unit), 133: deal transaction unit (matching unit), 141: supply/demand matching optimizing unit (matching unit, matching optimizing unit), 142: sector coupling unit (control unit), 150: deal management unit (power deal management unit, control unit), ER: energy resource (power supply resource), F1: contract information (information on contract), G; GA; GB: grid, L3: data preparation layer (layer), L4: grid virtualization layer (layer), L5: service transaction layer (layer), L6: orchestration layer (layer), VG; VGA; VGB: virtual grid, W: wire, S202: grid abstraction management process (virtual grid generating step), S501: RE100 power deal transaction (power deal management step), and S511: EV charge/discharge management process (power deal management step) .

## Claims

1. A power management device comprising:
a virtual grid generating unit that for each of grids, generates a virtual grid for collectively managing information including information on a power supply resource and a wire; and
a power deal management unit that based on the generated virtual grid, manages a power deal with a demand-side supplied with power from the power supply resource.

2. The power management device according to claim 1, wherein
the virtual grid includes information on a contract between a supplier-side that owns the power supply resource and the consumer-side.

3. The power management device according to claim 1, wherein
the virtual grid generating unit includes a matching unit that based on supplied power from the virtual grid, carries out supply/demand matching with a consumer on the demand-side.

4. The power management device according to claim 3, wherein
the virtual grid generating unit further includes a matching optimizing unit that in accordance with a result of supply/demand matching carried out by the matching unit, optimizes a connection between the virtual grid and the consumer.

5. The power management device according to claim 1, wherein
the virtual grid generating unit is divided into a plurality of layers.

6. The power management device according to claim 5, wherein
the virtual grid generating unit is divided into four layers.

7. The power management device according to claim 1, wherein
the virtual grid generating unit includes a prediction unit that based on given information, predicts a power demand/supply status in the virtual grid.

8. The power management device according to claim 7, wherein
the virtual grid generating unit includes a control unit that controls power supply and power demand between a plurality of virtual grids, based on a result of prediction on the plurality of virtual grids, the prediction being made by the prediction unit.

9. The power management device according to claim 1, wherein
the virtual grid generating unit includes a power type management unit that manages a type of power supplied by the power supply resource, based on information on the type of the power supplied by the power supply resource, the information being acquired from the power supply resource.

10. A power management method executed by a power management device that carries out power management through a virtual grid for collectively managing information including information on a power supply resource and a wire, the method comprising:
a virtual grid generating step of generating the virtual grid for each of grids; and
a power deal management step of managing a power deal with a demand-side supplied with power from the power supply resource, based on the generated virtual grid.
